# EUROPÄISCHE PATENTSCHRIFT

(11) **EP 0 588 262 B1**
(45) Veröffentlichungstag und Bekanntmachung des Hinweises auf die Patenterteilung: **19.11.1997**
(21) Anmeldenummer: 93114595.7
(22) Anmeldetag: 10.09.1993
(51) Int. Cl.: B60R 22/46

(54) **Verfahren und Vorrichtung zur Straffung von Sicherheitsgurten**
Method and means for the tightening of seat belts
Procédé et dispositif pour tendre des ceintures de sécurité

(30) Priorität: 14.09.1992 DE 4230663
(43) Veröffentlichungstag der Anmeldung: 23.03.1994
(73) Patentinhaber: TAKATA (EUROPE) VEHICLE SAFETY TECHNOLOGY GmbH, D-89081 Ulm (DE)
(72) Erfinder: Kopetzky, Robert, D-73557 Mutlangen (DE); Rosien, Harald, D-86736 Dornstadt (DE); Notar, Walter, D-89264 Weissenhorn (DE); Diepold, Ulrich, D-89081 Ulm (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 3 503 188
- DE-A- 3 715 845
- DE-A- 3 844 130
- DE-A- 4 013 046

## Beschreibung

Die Erfindung betrifft ein Verfahren und eine Vorrichtung zur Straffung von Sicherheitsgurten nach dem Oberbegriff des Anspruches 1 bzw. 2.

Vorrichtungen zur Straffung von Sicherheitsgurten dieser Art werden zunehmend in Kraftfahrzeugen eingesetzt, da dadurch eine Erhöhung der Sicherheit für die Fahrzeuginsassen erreicht wird. Da der Gurt aus Komfortgründen, insbesondere beim Tragen von voluminösen Kleidungsstücken nur locker am Körper eines Fahrzeuginsassen anliegt, wird bei einem Unfall der Körper zunächst, ohne vom Sicherheitsgrut gehalten zu werden, nach vorne schnellen, bis der Gurt sich strafft und die Auffangwirkung des Sicherheitsgurtes einsetzt.

Dies kann zu erheblichen Verletzungen der Fahrzeuginsassen führen, so daß heutzutage immer häufiger Gurtstraffermechanismen eingesetzt werden, um bei einem Unfall ein korrektes Anliegen der Sicherheitsgurte am Körper der Fahrzeuginsassen so schnell herbeizuführen, daß der Insasse von Anfang an sicher gehalten wird.

Überlicherweise wird als Verbindungselement das Gurtschloß des Sicherheitsgurtes verwendet. Dieses wird im Falle eines Unfalls in Richtung zum Chassis hin gezogen, wordurch der Sicherheitsgurt straff am Körper des Fahrzeuginsassen zur Anlage kommt. Dazu ist üblicherweise das Gurtschloß über ein Zugorgan mit einer Antriebseinheit verbunden, die über eine Energiequelle so antreibbar ist, daß das Gurtschloß über das Zugorgan in gewünschter Weise bewegt wird. Die Energiequelle wird dabei üblicherweise durch einen Beschleunigungssensor aktiviert, der auf Beschleunigungswerte wie sie typischerweise bei Unfällen auftreten anspricht.

Bei derartigen Gurtstraffermechanismen tritt nun das Problem auf, daß nach Aktivierung der Energiequelle und der damit verbundenen Straffung des Gurtes der von der Energiequelle aufgebaute Druck wieder abfällt und der nach vorne schnellende Körper des Fahrzeuginsassen den Gurt wieder in die ursprünglichen, ungestraffte Anfangsstellung auszuziehen sucht.

Um eine einmal erzielte Gurtstraffung beizubehalten, hat man bei einer gattungsgemäßen Vorrichtung (DE-A-35 03 188; DE-A-40 13 046) bereits eine nach vollendeter Straffung eine wesentliche Zurückbewegung des Verbindungselementes in Richtung zu einer Ausgangslage verhindernde, automatisch eingreifende Sperrvorrichtung vorgesehen, welche zumindest ein Hauptsperrelement aufweist, das bei Beginn der Zurückbewegung des Verbindungselementes automatisch aus einer Entsperrstellung in eine Sperrstellung gebracht wird, in welcher das Zugorgan vom Hauptsperrelement so festgeklemmt wird, daß der Sicherheitsgurt nicht weiter ausgezogen werden kann. Das automatische Eingreifen der Sperrvorrichtung wird bei den bekannten Anordnungen dadurch herbeigeführt, daß das Hauptsperrelement von vornherein in einem gewissen Kontakt mit dem Zugorgan steht (DE-A-35 03 188) oder die Sperrvorrichtung durch besondere Mittel wirksam gemacht wird (DE-A-40 13 046).

Weiter ist bereits eine Spannvorrichtung für einen Sicherheitsgurt von Fahrzeugen bekannt (DE-A-37 15 845), bei der der Sicherheitsgurt zwecks Straffung von einer bei Beschleunigung selbstklemmenden Doppelkeilvorrichtung erfaßt und gestrafft wird. Zur Vermeidung eines Rücklaufes nach der Straffung besitzt die Klemmeinrichtung eine Rücklaufsperre, die lediglich aus Zylinderrollen und einer schrägen Fläche an der Außenseite der Doppelkeilanordnung besteht und somit einen Rücklauf nicht sicher genug verhindern kann.

Bei allen vorbekannten Sicherheitsgurtstraffungen mit Rücklaufsperre besteht also ein Problem darin, einerseits eine Bewegung des Zugorgans in Straffrichtung zuzulassen und möglichst wenig zu behindern und andererseits nach einer Straffung und beginnendem Rücklauf des Zugorgans die weitere Rücklaufbewegung schnell und sicher zu beenden, ohne daß der bauliche Aufwand hierfür unangemessen hoch ist.

Der Erfindung liegt die Aufgabe zugrunde, ein Verfahren und eine Vorrichtung zur Straffung von Sicherheitsgurten der eingangs genannten Gattung anzugeben, bei denen auf einfache Weise die Straffung des Zugorgans durch das Hauptsperrelement möglichst wenig beeinträchtigt wird, gleichwohl aber eine schnelle und sichere Überführung des Hauptsperrelementes in die Sperrstellung erfolgt, wenn das Verbindungselement sich nach einer Straffung entgegen der Straffbewegung zu bewegen beginnt.

Zur Lösung dieser Aufgabe sind die Merkmale des kennzeichnenden Teils des Patentanspruches 1 bzw. 2 vorgesehen.

Erfindungsgemäß wird also für die Einsteuerung des Hauptsperrelementes in die Sperrstellung ein besonderes Steuersperrelement verwendet, welches, da es nur eine Einsteuerungskraft aufbringen muß, die Bewegung des mit ihm in Verbindung stehenden Zugorgans im Straffungsfalle kaum beeinträchtigt, gleichwohl aber eine sichere Einsteuerung gewährleistet.

Eine praktische Ausführungsform entnimmt man Anspruch 3. Durch das erfindungsgemäße Ringelement läßt sich erreichen, daß die Bewegung des Zugorgans in Straffungsrichtung kaum beeinträchtigt, gleichwohl aber eine sichere Mitnahme in Richtung des Hauptsperrelementes gewährleistet ist. Eine vorteilhafte Weiterbildung dieser Ausführungsform ist durch Anspruch 4 definiert.

Bei einer weiteren Realisierung des Erfindungsgedankens gemäß Anspruch 5 wird ein besonderer Zylinderstift mit keilförmiger Erweiterung verwendet, um das Hauptsperrelement im Falle der Rückbewegung des Zugorgans zwangsläufig in eine Sperrstellung zu überführen. Vorteilhafte Weiterbildungen dieser Ausführung sind durch die Ansprüche 6 bis 8 gekennzeichnet.

Eine andere Ausführungsform der Erfindung ist in den Ansprüchen 9 und 10 definiert.

Eine Verstärkung der Klemmwirkung im Falle eines Rückzugs des Zugorgans kann durch die Merkmale des Anspruches 11 erzielt werden.

Weitere vorteilhafte Weiterbildungen der Erfindung entnimmt man den Patentansprüchen 12 bis 19.

Die Erfindung wird nachfolgend anhand eines Ausführungsbeispiels unter Bezugnahme auf die Zeichnung erläutert; in dieser zeigt:
- Fig. 1: eine teilweise geschnittene Seitenansicht einer erfindungsgemäß ausgebildeten Vorrichtung zur Straffung von Sicherheitsgurten, die über ein Gurtschloß mit den Sicherheitsgurten verbunden ist,
- Fig. 2: einen Ausschnitt aus der Vorrichtung nach Fig. 1, bei der die Sperrvorrichtung in der Entsperr- und Sperrstellung dargestellt ist,
- Fig. 3: einen Ausschnitt einer Sperrvorrichtung nach einer weiteren Ausführungsform,
- Fig. 4: eine teilweise geschnittene Seitenansicht einer weiteren Ausführungsform einer erfindungsgemäß ausgebildeten Vorrichtung,
- Fig. 5: eine teilweise geschnittene Seitenansicht im Bereich des Hauptsperrelements nach Fig. 4,
- Fig. 6: eine schematische, teilweise geschnittene Seitenansicht einer weiteren Ausführungsform der Erfindung und
- Fig. 7: einen Ausschnitt einer weiteren Ausführungsform der Erfindung, bei der das Prinzip der kinematischen Umkehrung dargestellt ist.

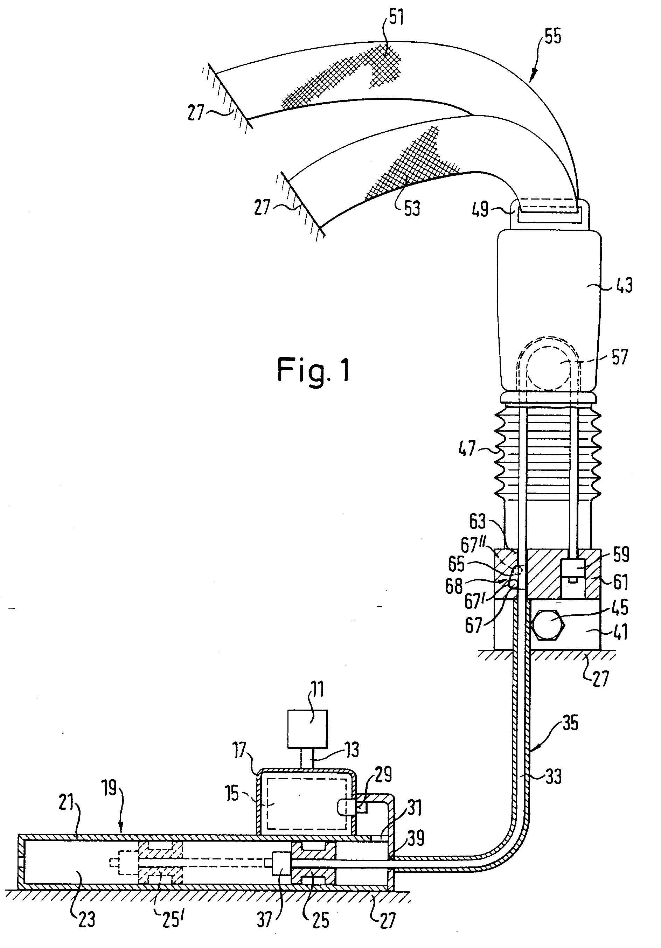

Nach Fig. 1 ist ein Beschleunigungssensor 11 über eine Steuerleitung 13 mit einem eine Energiequelle 15, insbesondere eine pyrotechnische Ladung enthaltenden Raum 17 verbunden.

Der Raum 17 ist an einer Antriebseinheit 19 angeordnet, die eine Zylinder-Kolben-Anordnung mit einem zylindrischen Gehäuse 21 und einem in einem Zylinderraum 23 verschiebbaren Kolben 25 umfaßt und an einem Chassis 27 des Fahrzeugs befestigt ist.

Der Kolben 25 ist dabei für ein besseres Verständnis der Funktionsweise in einer Ausgangsposition mit durchgezogenen Linien und in einer zweiten von der Ausgangsstellung verschobenen Position 25' gestrichelt dargestellt.

Das Innere des die Energiequelle 15 enthaltenden Raumes 17 steht mit dem Zylinderraum 23 über Öffnungen 29, 31 in Verbindung.

Durch den Kolben 25 ist ein Ende einer Seele 33 eines Bowdenzugs 35 hindurchgeführt und über ein Endstück 37 mit dem Kolben 25 verbunden. Die Seele 33 tritt durch eine abgedichtete Öffnung 39 aus dem zylindrischen Gehäuse 21 aus, an dem das eine Ende des Mantels des Bowdenzuges 35 abgestützt ist.

Das andere Ende des Mantels des Bowdenzugs 35 ist an einem Befestigungselement 41 eines Gurtschlosses 43 abgestützt, das über eine Schraube 45 am Chassis 27 des Fahrzeugs befestigt ist. Das Gurtschloß 43 steht mit dem Befestigungselement über eine Federmanschette 47 in Verbindung.

In das Gurtschloß 43 ist ein Riegelstück 49 einschiebbar, welches über zwei Gurtstücke 51, 53 eines Sicherheitsgurtes 55 mit geeigneten Stellen des Chassis 27 verbunden sind.

Das freie Ende der Seele 33 ist um eine Umlenkrolle 57, die am Gurtschloß 43 befestigt ist, über einen Winkel 180° geführt und mit ihrem freien Ende mit einem Fixierelement 59 an dem am Chassis 27 befestigten Befestigungselement 41 fixiert. Das Gurtschloß 43 ist auf diese Weise mit der Antriebseinheit 19 nach dem Flaschenzugprinzip verbunden.

Registriert der Beschleunigungssensor 11 einen, für einen Unfall typischen Beschleunigungswert, so aktiviert er über die Steuerleitung 13 die im Raum 17 enthaltene Energiequelle 15.

Der durch die Explosion der pyrotechnischen Ladung entstehende Druck dringt durch die Öffnungen 29 und 31 in den Zylinderraum 23 ein und beaufschlagt die rechte Seitenfläche des in der Ausgangsstellung dargestellten Kolbens 25. Durch den Druck wird der Kolben 25 schlagartig nach links in Richtung der dargestellten Position 25' verschoben, wobei die am Kolben 25 befestigte Seele 33 des Bowdenzugs 35 ebenfalls nach links bewegt wird.

Durch diese Verschiebung der Seele 33 wird das Gurtschloß 43 mit dem eingesteckten Riegelstück 49 zum Befestigungselement 41 hin bewegt, wobei die Federmanschette 47 zusammengedrückt wird. Dabei wird der in das Gurtschloß 43 eingerastete Sicherheitsgurt 55 gestrafft, so daß er ausreichend eng am Körper des Fahrzeuginsassen anliegt.

Ein Teil des Befestigungselements 41 ist als Durchführung 61 ausgebildet, die eine Bohrung 63 aufweist, durch die die Seele 33 des Bowdenzugs 35 geführt ist.

An der Bohrung 63 ist eine keilförmige Erweiterung 65 vorgesehen, in der ein Zylinderstift 67 in einer die Entsperrstellung charakterisierende Position 67' und einer die Sperrstellung charakterisierende Position 67'' dargestellt ist. Die an der Bohrung 63 angeordnete keilförmige Erweiterung 65 bildet zusammen mit dem Zylinderstift 67 eine Sperrvorrichtung 68 für eine erfindungsgemäß ausgebildete Vorrichtung zur Straffung von Sicherheitsgurten.

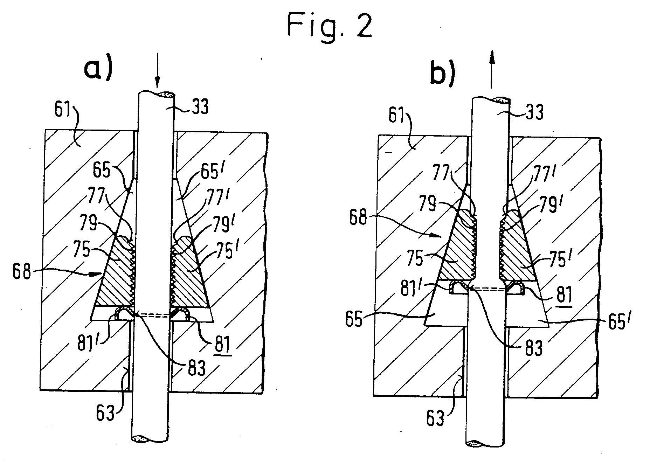

Fig. 2 zeigt eine Ausführungsform der Sperrvorrichtung 68. Fig. 2a zeigt die sich in der Entsperrstellung und Fig. 2b die sich in der Sperrstellung befindende Sperrvorrichtung 68. Zusätzlich zu der keilförmigen Erweiterung 65 ist eine zweite keilförmige Erweiterung 65' an der Bohrung 63 vorgesehen, die der keilförmigen Erweiterung 65 radial gegenüberliegt. In den beiden keilförmigen Erweiterungen 65 und 65' sind zwei Sperrkeile 75, 75' angeordnet, deren jeweils der Seele 33 zugewandten Seitenflächen als Klemmflächen 77, 77' mit Verzahnungen 79, 79' ausgebildet sind.

An den Unterseiten der Sperrkeile 75, 75' ist ein als Ringelement 81' ausgebildetes Steuersperrelement 81 angeordnet, dessen innere Umfangsfläche 83 an der Seele 33 unter geringem Druck anliegt. Das innere Ende des Ringelements 81' ist dabei so nach unten gebogen, daß eine Bewegung der Seele 33 in Pfeilrichtung nur unwesentlich beeinträchtigt wird. Die Sperrkeile 75, 75' liegen nur berührend mit ihren Klemmflächen 77, 77' an der Außenseite der Seele 33 an, so daß auch durch die Sperrkeile die Bewegung der Seele 33 in Pfeilrichtung nicht behindert wird.

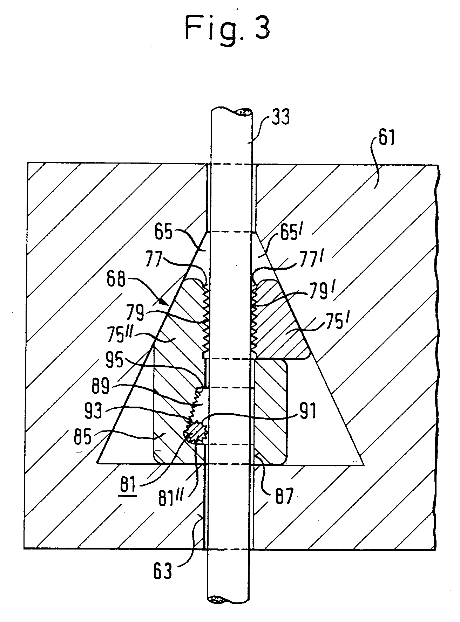

Wird dagegen die Seele 33 in die durch den Pfeil in Fig. 3b angedeutete Richtung gezogen, so wird das Steuersperrelement 81 von der Seele 33 mit nach oben bewegt, wodurch auch die Sperrkeile 75 und 75' vom Steuersperrelement 81 mit nach oben mitgenommen werden und sich aufgrund der keilförmigen Form der Erweiterungen 65 und 65' mit ihren Klemmflächen 77 und 77' in die Seele 33 einpressen, wodurch eine vollständige Verklemmung der Seele 33 stattfindet und die Bewegung der Seele 33 beendet wird.

Fig. 3 zeigt eine weitere Ausführungsform der Sperrvorrichtung 68 mit in den zwei keilförmigen Erweiterungen 65 und 65' angeordneten Sperrkeilen 75' und 75''. Der linke Sperrkeil 75'' weist an seinem unteren Ende einen über die Klemmfläche 77 hinausragenden Fortsatz 85 mit einer Bohrung 87 für die Seele 33 auf, an der eine weitere keilförmige Erweiterung 89 angeordnet ist. In der keilförmigen Erweiterung 89 ist ein Zylinderstift 81'' als Steuersperrelement 81 vorgesehen. Der Zylinderstift 81'' ist mit einer Verzahnung 91 versehen, die in eine Verzahnung 93 an der linken Innenfläche 95 der keilförmigen Erweiterung 89 eingreifen kann.

Bei einer Aufwärtsbewegung der Seele 33 wird zunächst der als Steuersperrelement 81 augebildete Zylinderstift 81'' mit nach oben bewegt, wodurch eine Verklemmung der Seele 33 bezüglich des Sperrkeiles 85 eintritt. Der Zylinderstift 81'' wird als Steuersperrelement 81 verwendet, da er zur Aufnahme der vollständigen am Zugorgan 33 bei einem Unfall auftretenden Kraft nicht stark genug ausgebildet ist aber eine besonders gute Mitnahme durch das Zugorgan 33 gewährleistet.

Durch die Verklemmung der Seele 33 mit dem Sperrkeil 75'' über das Steuersperrelement 80 wird der Sperrkeil 75'' ebenfalls nach oben bewegt, wobei er den auf dem Fortsatz 85 aufliegenden Sperrkeil 75' mit nach oben mitnimmt. Aufgrund der Keilform der keilförmigen Erweiterungen 65 und 65' werden die Klemmflächen 77 und 77' in die Oberfläche der Seele 33 eingepreßt, wodurch eine vollständige Verklemmung stattfindet und die Zurückbewegung der Seele 33 beendet wird.

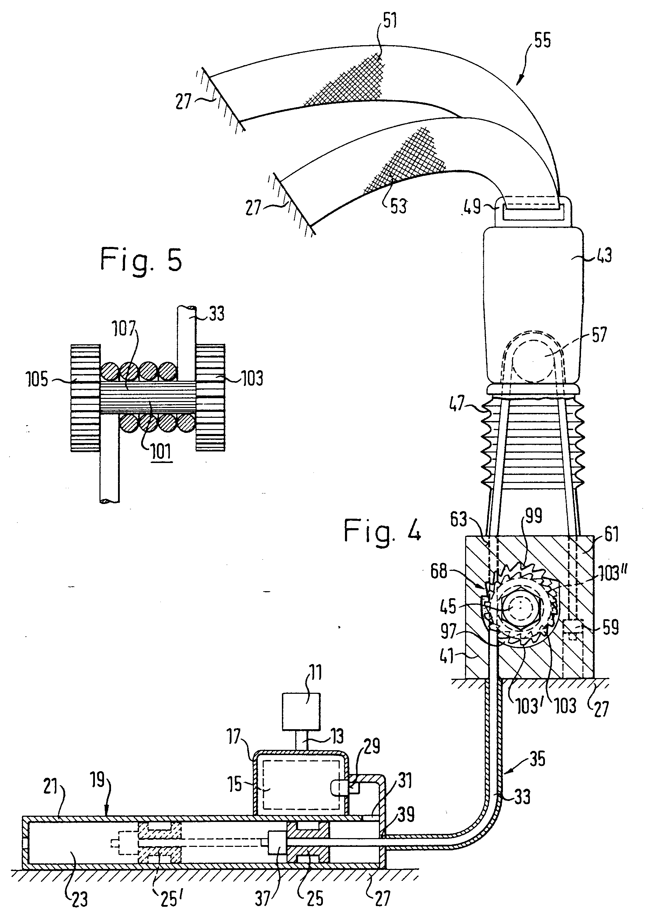

In Fig. 4 ist an der Bohrung 63 eine annähernd kreisförmige Erweiterung 97 vorgesehen, die über ihren oberen Teilbereich eine Rastverzahnung 99 aufweist. In der annähernd kreisförmigen Erweiterung 97 ist eine Welle 101 (Fig. 5) angeordnet, an deren Enden zwei drehfest befestigte Zahnräder 103, 105 angeordnet sind. Das Zahnrad 103 ist in einer die Entsperrstellung charakterisierenden Position 103' mit durchgezogenen Linien und in einer die Sperrstellung charakterisierenden Position 103'' dargestellt. In der Position 103'' greifen die Zahnräder 103 und 105 in die Rastverzahnung 99 der annähernd kreisförmigen Erweiterung 97 ein.

Die Seele 33 ist mehrfach um die Welle 101 gewickelt, so daß eine Reibung zwischen der Welle 101 und der Seele 33 auftritt, die so hoch ist, daß ein Durchrutschen der Seele 33 auf der Welle 101 verhindert wird.

Wird bei einem Unfall die Energiequelle 15 vom Beschleunigungssensor 11 aktiviert und die Seele 33 von der Antriebseinheit 19 nach unten gezogen, so wird die Welle 101 durch die Seele 33 zu einer Drehbewegung entgegen dem Uhrzeigersinn angetrieben. Dabei rutschen die Zahnräder 103 und 105 auf der glatten Fläche des unteren Teilbereichs der annähernd kreisförmigen Erweiterung 97 ab. Das bedeutet, daß in der Entsperrstellung 103', in der die Zahnräder 103 und 105 nicht mit der Rastverzahnung 99 in Eingriff stehen, die Auszugsbewegung der Seele 33 nicht behindert wird.

Wird nun durch das Hineinfallen eines Fahrzeuginsassen in den Sicherheitsgurt 55 das Gurtschloß 43 und damit die Seele 33 nach oben bewegt, so wird die Welle 101 mit den Zahnrädern 103 und 105 mit nach oben mitbewegt, wodurch die Zahnräder 103 und 105 in Eingriff mit der Rastverzahnung 99 kommen. Dadurch wird ein Drehen der Welle 101 verhindert und somit die weitere Rückzugbewegung der Seele 33 beendet.

Fig. 5 zeigt eine Seitenansicht der Welle 101 mit den Zahnrädern 103 und 106 mit teilweise geschnittener Seele 33. Man erkennt eine Riffelung 107 der Welle 101, wodurch ein Rutschen der Seele 33 auf der Welle 101 noch besser vermieden wird.

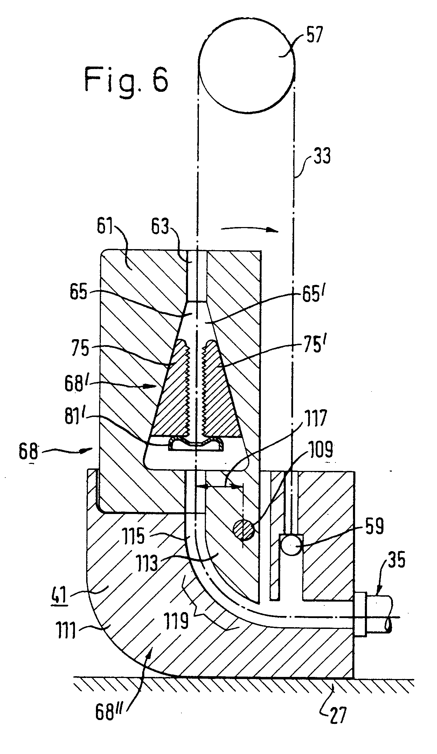

In Fig. 6 ist die Durchführung 61 über eine Achse 109 verschwenkbar mit dem als Lagerelement 111 ausgebildeten Befestigungselement 41 verbunden. Am unteren Ende der Durchführung 61 ist ein Ansatz 113 ausgebildet, der zusammen mit dem Lagerorgan 111 eine Führung 115 für einen Teilbereich der Seele 33 bildet.

In der in Fig. 6 dargestellten Entsperrstellung wird die Seele 33 klemmfrei in der Führung 115 geführt

Wird bei einem Unfall nach der vollständigen Straffung des nicht dargestellten Sicherheitsgurtes die Seele 33 durch das Hineinfallen des Fahrzeuginsassen in den Sicherheitsgurt nach oben verschoben, so wird zum einen die Bewegung der Seele 33 durch den oberen Teil 68' der Sperrvorrichtung 68 analog der Beschreibung zu Fig. 2 beendet.

Zum anderen wirkt durch den Abstand 117 zwischen der Seele 33 und der Achse 109 ein Drehmoment in Pfeilrichtung auf die Durchführung 61, wodurch diese im Uhrzeigersinn um die Achse 109 verschwenkt wird. Dadurch bewegt sich der Ansatz 113 nach links, wodurch die Führung 115 verschmälert wird, was zu einer Verklemmung der Seele 33 in der Führung 115 über einen Teilbereich 119 führt. Durch diese zusätzliche Verklemmung wird die Zurückbewegung der Seele 33 und damit des nicht dargestellten Gurtschlosses besonders sicher verhindert.

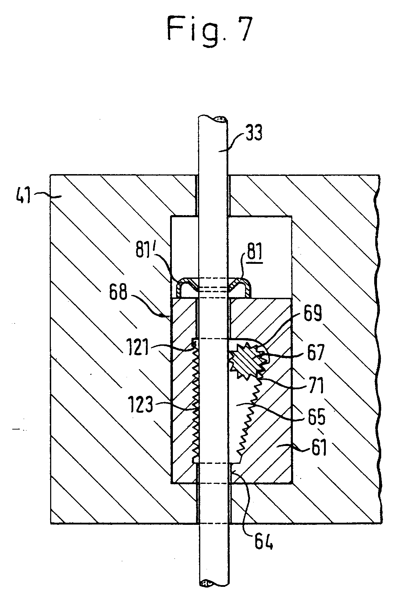

Fig. 7 zeigt eine Ausführungsform der Sperrvorrichtung 68, die nach dem Prinzip der kinematischen Umkehr arbeitet. Dabei ist der Zylinderstift 67 am Befestigungselement 41 chassisfest verbunden, während die Durchführung 61 mit der Bohrung 64 und der keilförmigen Erweiterung 65 gegenüber dem Befestigungselement 41 verschiebbar an der Seele 33 angeordnet ist.

An der Oberseite der Durchführung 61 ist das als Ringelement 81' ausgebildete Steuersperrelement 81 befestigt.

Der Zylinderstift 67 und die schräge Seite der keilförmigen Erweiterung 65 sind analog zu Fig. 2 mit Verzahnungen 69, 71 versehen. Die der Seele 33 zugewandte Seitenfläche 121 der keilförmigen Erweiterung 65 weist ebenfalls eine Verzahnung 123 auf.

Bei einer Bewegung der Seele 33 nach unten, wie sie bei einer Straffung des nicht dargestellten Sicherheitsgurtes 55 auftritt befindet sich die Sperrvorrichtung 68 in der dargestellten Entsperrstellung, so daß die Bewegung der Seele 33 nach unten nahezu ungehindert ausgeführt werden kann.

Wenn bei einem Unfall die Seele 33 nach oben gezogen wird, so wird die Durchführung 61 zum einen durch das Steuersperrelement 81 und zum anderen durch die Verzahnung 123 mit der Seele 33 nach oben verschoben, wobei der Zylinderstift 67 in dem schmalen Ende der keilförmigen Erweiterung 65 zu liegen kommt und damit die Seele 33 zwischen dem chassisfest angeordneten Zylinderstift 67 und der linken Seitenfläche der Durchführung 61 verklemmt wird, wodurch die Zurückbewegung der Seele 33 beendet wird.

## Patentansprüche

1. Verfahren zur Straffung von Sicherheitsgurten (55), insbesondere für Fahrzeuge mit zumindest einem an wenigstens zwei und vorzugsweise drei Punkten am Chassis (27) des Fahrzeugs befestigten Gurtstück (51,53), das mindestens an einem der Befestigungspunkte über ein Verbindungselement (43), vorzugsweise ein Gurtschloß mit einem am Chassis (27) befestigten Straffermechanismus verbunden ist, welcher zumindest einen Beschleunigungssensor (11), eine Energiequelle (15), eine Antriebseinheit (19) und ein Zugorgan (33) umfaßt, wobei die Energiequelle (15) mittels des Beschleunigungssensors (11) aktivierbar ist und bei Aktivierung das Verbindungselement (43) über das mit der Antriebseinheit (19) verbundene Zugorgan (33), insbesondere ein Seil oder einen Bowdenzug (35), schlagartig aus seiner Ausgangslage so wegbewegt wird, daß der Gurt (55) gestrafft wird, wobei
nach vollendeter Straffung eine wesentliche Zurückbewegung des Verbindungselements (43) in Richtung seiner Ausgangslage durch eine automatisch eingreifende Sperrvorrichtung (68) verhindert wird, in dem
bei Beginn der Zurückbewegung des Verbindungselements (43) zumindest ein Hauptsperrelement (67,75,75',75''; 103,105) automatisch aus einer Entsperrstellung (67',103') in eine Sperrstellung (67'',103'') gebracht wird, in welcher das Zugorgan (33) vom Hauptsperrelement (67,75,75',75''; 103,105) so festklemmt wird, daß die Zurückbewegung beendet wird,
dadurch **gekennzeichnet,**
daß ein mit dem Hauptsperrelement (67,75,75',75''; 103,105) in Verbindung stehendes Steuersperrelement (81,101) bei Beginn der Zurückbewegung des Verbindungselements (43) automatisch vom Zugorgan (33) so bewegt wird, daß es das Hauptsperrelement (67,75,75', 75'',101,103,105) von der Entsperrstellung (67',103') in die Sperrstellung (67'',103'') bewegt.

2. Vorrichtung zur Straffung von Sicherheitsgurten (55), insbesondere für Fahrzeuge mit zumindest einem an wenigstens zwei und vorzugsweise drei Punkten am Chassis (27) des Fahrzeugs befestigten Gurtstück (51,53), das mindestens an einem der Befestigungspunkte über ein Verbindungselement (43), vorzugsweise ein Gurtschloß mit einem am Chassis (27) befestigten Straffermechanismus verbunden ist, welcher zumindest einen Beschleunigungssensor (11), eine Energiequelle (15), eine Antriebseinheit (19) und ein Zugorgan (33) umfaßt, wobei die Energiequelle (15) mittels des Beschleunigungssensors (11) aktivierbar ist und bei Aktivierung das Verbindungselement (43) über das mit der Antriebseinheit (19) verbundene Zugorgan (33), insbesondere ein Seil oder einen Bowdenzug (35), schlagartig aus seiner Ausgangslage so wegbewegt wird, daß der Gurt (55) gestrafft wird, insbesondere zur Durchführung des Verfahrens nach einem oder mehreren der vorhergehenden Ansprüche, wobei
chassisfest oder am Verbindungsteil (43) zumindest eine Durchführung (61) mit Bohrung (63) für das Zugorgan (33) vorgesehen ist, und eine Sperrvorrichtung (68) in der Durchführung (61) angeordnet ist, die
zumindest ein Hauptsperrelement (67,75,75',75''; 103,105) aufweist, welches bei Beginn der Zurückbewegung des Verbindungselements (43) automatisch aus einer Entsperrstellung (67',103') in eine Sperrstellung (67'',103'') gebracht wird, in welcher das Zugorgan (33) vom Hauptsperrelement (67,75,75',75''; 103,105) so festklemmt wird, daß die Zurückbewegung beendet wird,
dadurch **gekennzeichnet,**
daß ein Steuersperrelement (81,101) vorgesehen ist, das mit dem Hauptsperrelement (67,75,75',75''; 103,105) in Verbindung steht und das bei Beginn der Zurückbewegung des Verbindungselements (43) automatisch vom Zugorgan(33) so bewegt wird, daß es das Hauptsperrelement (67,75,75', 75'',,103,105) von der Entsperrstellung (67',103') in die Sperrstellung (67'',103'') bewegt.

3. Vorrichtung nach Anspruch 2,
dadurch **gekennzeichnet,**
daß das Hauptsperrelement als Sperrkeil (75,75',75'') ausgebildet ist, der so ausgebildet und in der keilförmigen Erweiterung (65,65') angeordnet ist, daß eine Seite des Sperrkeils (75,75',75'') im wesentlichen parallel zur Oberfläche des Zugorgans (33) als Klemmfläche (77,77') und eine andere Seite im wesentlichen parallel zu der vom Zugorgan abgewandten Innenfläche (73) der keilförmigen Erweiterung (65,65') verläuft, und
daß das das Zugorgan (33) umfassende Steuersperrelement (81) als an der Unterseite des Sperrkeils/der Sperrkeile (75,75',75'') angeordnetes Ringelement (81') ausgebildet ist, dessen innere Umfangsfläche (83) am Zugorgan (33) mit einem geringen Druck so anliegt, daß bei einer Bewegung des Zugorgans (33) zum Verbindungselement (43) hin das Ringelement (81') und der Sperrkeil/die Sperrkeile (75,75',75'') mit dem Zugorgan (33) mitbewegt werden.

4. Vorrichtung nach Anspruch 3,
dadurch **gekennzeichnet,**
daß die am Zugorgan (33) anliegende Seite (77,77') des Sperrkeils (75,75',75'') aufgerauht bzw. mit einer Struktur, beispielsweise einer Verzahnung (79,79') versehen ist.

5. Vorrichtung nach Anspruch 2,
dadurch **gekennzeichnet,**
daß das Hauptsperrelement als Sperrkeil (75,75',75'') ausgebildet ist, der so ausgebildet und in der keilförmigen Erweiterung (65,65') angeordnet ist, daß eine Seite des Sperrkeils (75,75',75'') im wesentlichen parallel zur Oberfläche des Zugorgans (33) als Klemmfläche (77,77') und eine andere Seite im wesentlichen parallel zu der vom Zugorgan abgewandten Innenfläche (73) der keilförmigen Erweiterung (65,65') verläuft, und
daß der Sperrkeil (75'') an seinem unteren Ende einen über die Klemmfläche (77) hinausragenden Fortsatz (85) mit einer Bohrung (87) für das Zugorgan (33) und einer weiteren keilförmigen Erweiterung (89) aufweist, in welcher ein Zylinderstift (81'') als Steuersperrelement (81) angeordnet ist, über den nach Beginn der Zurückbewegung des Verbindungselements (43) der Sperrkeil (75'') und das Zugorgan (33) miteinander in kraftschlüssiger Verbindung stehen.

6. Vorrichtung nach Anspruch 5,
dadurch **gekennzeichnet,**
daß die Umfangsfläche des Zylinderstiftes (81'') eine rauhe bzw. mit einer Struktur, beispielsweise eine Verzahnung (91) versehene Oberfläche besitzt.

7. Vorrichtung nach Anspruch 5 oder 6,
dadurch **gekennzeichnet,**
daß die vom Zugorgan (33) abgewandte Innenfläche (95) der weiteren keilförmigen Erweiterung (89) aufgerauht bzw. mit einer Struktur, beispielsweise eine Verzahnung (93) versehen ist.

8. Vorrichtung nach einem der Ansprüche 5 bis 7,
dadurch **gekennzeichnet,**
daß auf dem Fortsatz (85) des Sperrkeils (75'') ein Sperrkeil (75') ohne Fortsatz so aufliegt, daß sich die beiden Klemmflächen (77,77') der Sperrkeile (75',75'') bezüglich des Zugorgans (33) radial gegenüberliegen.

9. Vorrichtung nach Anspruch 2,
dadurch **gekennzeichnet,**
daß an der Bohrung (63) eine annähernd kreisförmige Erweiterung (97) vorgesehen ist, die über einen zum Verbindungselement (43) hin gelegenen Teilbereich mit einer Rastverzahnung (99) versehen ist, daß in der kreisförmigen Erweiterung (97) eine Welle (101) mit zwei endseitig drehfest befestigten Zahnrädern (103,105) angeordnet ist, die nur in der Sperrstellung (103') in die Rastverzahnung (99) eingreifen, und daß die Welle (101) mehrfach von dem Zugorgan (33) derart umwickelt ist, daß die Welle (101) vom sich entgegen der Straffrichtung bewegten Verbindungselement (43) bis zum Eingriff der Zahnrader (103,105) in die Rastverzahnung (99) mitgenommen wird.

10. Vorrichtung nach Anspruch 9
dadurch **gekennzeichnet,**
daß die Oberfläche der Welle (101) aufgerauht oder mit einer Struktur (107) versehen ausgebildet ist.

11. Vorrichtung nach einem der Ansprüche 2 bis 10,
dadurch **gekennzeichnet,**
daß die Durchführung (61) über eine Achse (109) verschwenkbar mit einem am Chassis (27) befestigten Lagerelement (111) verbunden ist, daß das Zugorgan (33) in einer von dem Lagerelement (111) und einem an der Durchführung (61) vorgesehenen Ansatz (113) gebildeten Führung (115) in der Entsperrstellung klemmfrei geführt ist und daß die Achse (109) so angeordnet ist, daß in der Sperrstellung ein Drehmoment so auf die Durchführung (61) wirkt, daß der Ansatz (113) in Richtung des Lagerelements (111) verschwenkt ist und das Zugorgan (33) in der Führung (115) festgeklemmt ist.

12. Vorrichtung nach einem der Ansprüche 2 bis 11,
dadurch **gekennzeichnet,**
daß die miteinander zusammenwirkenden Bauelemente der Sperrvorrichtung (68) kinematisch vertauscht sind.

13. Vorrichtung nach Anspruch 12,
dadurch **gekennzeichnet,**
daß das Hauptsperrelement (67) chassisfest oder am Verbindungsteil (43) und die Durchführung (61) am Zugorgan (33) verschiebbar angeordnet ist und sich die keilförmige Erweiterung (65) vom Verbindungselement (43) weg verjüngt.

14. Vorrichtung nach Anspruch 12 oder 13,
dadurch **gekennzeichnet,**
daß die dem Zugorgan (33) zugewandte Innenfläche (121) der keilförmigen Erweiterung (65) aufgerauht bzw. mit einer Struktur, beispielsweise einer Verzahnung (123) versehen ist.

15. Vorrichtung nach einem der Ansprüche 12 bis 14,
dadurch **gekennzeichnet,**
daß das an der Durchführung (61) angeordenete Steuersperrelement (81) so am Zugorgan (33) angreift, daß bei einer Bewegung des Zugorgans (33) zum Verbindungselement (43) hin das Steuersperrelement (81) und die Durchführung (61) mit dem Zugorgan (33) mitbewegt werden.

16. Vorrichtung nach einem der Ansprüche 2 bis 15,
dadurch **gekennzeichnet,**
daß das Zugorgan (33) Bestandteil eines Flaschenzuges ist, der einerseits am Verbindungselement (43) und andererseits am Chassis (27) befestigt ist.

17. Vorrichtung nach Anspruch 16,
dadurch **gekennzeichnet,**
daß an dem Verbindungselement (43) zumindest eine Umlenkvorrichtung für das Zugorgan (33) angeordnet ist, durch welche das dem Verbindungselement (43) zugewandte Endstück des Zugorgans (33) bevorzugt um etwa 180° umgelenkt wird, und daß das umgelenkte Endstück des Zugorgans (33) mit dem Chassis (27) in Verbindung steht.

18. Vorrichtung nach Anspruch 16 oder 17,
dadurch **gekennzeichnet,**
daß an dem Verbindungselement (43) als Umlenkvorrichtung eine Umlenkrolle (57) drehbar gelagert ist, an der das Zugorgan (33) im wesentlichen über einen Winkel von 180° anliegt.

19. Vorrichtung nach einem der Ansprüche 16 bis 18,
dadurch **gekennzeichnet,**
daß das Zugorgan (33) genau einmal um die Umlenkvorrichtung geführt ist und mit seinem freien Ende am Chassis (27) befestigt ist.

## Claims

1. Method of tensioning safety belts (55), in particular for vehicles having at least one belt piece (51, 53) secured to at least two and preferably to three points at the chassis (27) of the vehicle, the belt piece being connected at at least one of the fastening points via a connection element (43), preferably a belt lock, to a tensioner mechanism secured to the chassis (27), the tensioner mechanism having at least one acceleration sensor (11), an energy source (15), a drive unit (19) and a pulling member (33), wherein the energy source (15) is activatable by means of the acceleration sensor (11) and, on activation, moves the connection element (43) via the pulling member (33) connected to the drive unit (19), in particular a cable or a Bowden cable (35), abruptly out of its initial position so that the belt is tensioned, wherein, after tensioning has been completed, a substantial return movement of the connection element (43) in the direction of its starting position is prevented by an automatically engaging blocking device (68) in that, at the start of the return movement of the connection element (43), at least one main blocking element (67, 75, 75', 75"; 103, 105) is automatically brought from an unblocking position (67', 103') into a blocking position (67", 103") in which the tension member (33) is so fixedly clamped by the main blocking element (67, 75, 75', 75"; 103, 105) that the return movement is terminated, characterised in that a blocking control element (81, 101) standing in communication with the main blocking element (67, 75, 75', 75"; 103, 105) is automatically moved by the pulling member (33) at the start of the return movement of the connection element (43) so that it moves the main blocking element (67, 75, 75', 75"; 103, 105) from the unblocking position (67', 103') into the blocking position (67", 103").

2. Apparatus for tensioning safety belts (55), in particular for vehicles having at least one belt piece (51, 53) secured to at least two and preferably three points at the chassis (27) of the vehicle, the belt piece being connected at at least one of the fastening points via a connection element (43), preferably a belt lock, to a tensioner mechanism secured to the chassis (27), the tensioner mechanism having at least one acceleration sensor (11), an energy source (15), a drive unit (19) and a pulling member (33), wherein the energy source (15) is activatable by means of the acceleration sensor (11) and, on activation, moves the connection element (43) via the pulling member (33) connected to the drive unit (19), in particular a cable or a Bowden cable (35), abruptly out of its initial position so that the belt is tensioned, in particular for carrying out the method in accordance with one or more of the preceding claims, wherein at least one lead-trhough (61) with a bore (63) for the pulling member (33) is provided and is fixed to the chassis or to the connection part (43), and wherein a blocking device (68) is arranged in the lead-through (61), and has at least one main blocking element (67, 75, 75', 75"; 103, 105) which, at the start of the return movement of the connection element (43), is automatically brought out of an unblocking position (67', 103') into a blocking position (67", 103"), in which the pulling member (33) is so fixedly clamped by the main blocking element (67, 75, 75', 75"; 103, 105) that the return movement is terminated, characterised in that a blocking control element (81, 101) is provided which stands in communication with the main blocking element (67, 75, 75', 75"; 103, 105) and which is automatically moved by the pulling member (33) at the start of the return movement of the connection element (43) so that it moves the main blocking element (67, 75, 75', 75"; 103, 105) from the unblocking position (67', 103') into the blocking position (67", 103").

3. Apparatus in accordance with claim 2, characterised in that the main blocking element is formed as a blocking wedge (75, 75', 75"), which is so formed and arranged in a wedge-like, broadened portion (65, 65') that one side of the blocking wedge (75, 75', 75") extends substantially parallel to the surface of the pulling member (33) as a clamping surface (77, 77'), and another side extends substantially parallel to the inner surface (73) of the wedge-like, broadened portion (65, 65') remote from the pulling member; and in that the blocking control element (81), which surrounds the pulling member (33), is formed as a ring element (81') arranged at the lower side of the blocking wedge, or of the blocking wedges (75, 75', 75"), with the inner peripheral surface (83) of the ring element contacting the pulling member (33) with a low pressure so that, on a movement of the pulling member (33) towards the connection element (43), the ring element (81') and the blocking wedge/the blocking wedges (75, 75', 75") are moved with the pulling member (33).

4. Apparatus in accordance with 3, characterised in that the side (77, 77') the blocking wedge (75, 75', 75") which contacts the pulling member (33) is roughened or provided with a structure, in particular a toothed structure (79, 79').

5. Apparatus in accordance with claim 2, characterised in that the main blocking element is formed as a blocking wedge (75, 75', 75"), which is so designed and arranged in the wedge-shaped, broadened portion (65, 65') that one side of the blocking wedge (75, 75', 75") extends substantially parallel to the surface of the pulling member (33) as a clamping surface (77, 77') and another side extends substantially parallel to the inner surface (73) of the wedge-like, broadened portion (65, 65') remote from the pulling member (33); and in that the blocking wedge (75") has at its lower end a projection (85) projecting beyond the clamping surface (77) and having a bore (87) for the pulling member (33) and a further wedge-like, broadened portion (89) in which a cylindrical pin (81") is arranged as a blocking control element (81), via which, after the start of the return movement of the connection element (43), the blocking wedge (75") and the pulling member (33) stand in a force-transmitting connection with one another.

6. Apparatus in accordance with claim 5, characterised in that the peripheral surface of the cylindrical pin (81") has a rough surface or a surface provided with a structure, for example a toothed structure (91).

7. Apparatus in accordance with claim 5 or claim 6, characterised in that the inner surface (95) of the further wedge-like broadened portion (89) remote from the pulling member (33) is roughened or provided with a structure, for example a toothed structure (93).

8. Apparatus in accordance with one of the claims 5 to 7, characterised in that a blocking wedge (75') without projection lies on the projection (85) of the blocking wedge (75") in such a way that the two clamping surfaces (77, 77') of the blocking wedges (75', 75") lie radially opposite one another with respect to the pulling member (33).

9. Apparatus in accordance with claim 2, characterised in that an approximately circular, broadened portion (97) is provided at the bore (63) and is provided over a partial region, which is disposed towards the connection element (43), with a latching tooth arrangement (99); in that a shaft (101) with two gearwheels (103, 105) rotationally fixedly secured at its ends is arranged in the circular broadened portion (97), with the gearwheels only engaging into the toothed latch arrangement (99) in the blocking position (103'); and in that the pulling member (33) is wound several times around the shaft (101) in such a way that the shaft (101) is moved along by the connection element (43) when moved opposite to the tensioning direction until the gearwheels (103, 105) engage into the latching tooth arrangement (99).

10. Apparatus in accordance with claim 9, characterised in that the surface of the shaft (101) is roughened or provided with a structure (107).

11. Apparatus in accordance with one of the claims 2 to 10, characterised in that the lead-through (61) is pivotally connected via an axle (109) to a mounting element (111) secured to the chassis (27); in that the pulling member (33) is guided with clamping in the end-blocking position in a guide (115) formed by the mounting element (111) and by a projection (113) provided at the lead-through (61); and in that the axle (109) is so arranged that in the blocking position a torque acts on the lead-through (61) in such a way that the projection (113) is pivoted in the direction towards the mounting element (111) and the pulling member (33) is fixedly clamped in the guide (115).

12. Apparatus in accordance with one of the claims 2 to 11, characterised in that the components of the blocking device (68) which cooperate with one another are kinematically exchanged.

13. Apparatus in accordance with claim 12, characterised in that the main blocking element (67) is fixedly secured to the chassis or to the connection part (43) and the lead-through (61) is displaceably arranged at the pulling member (33), and the wedge-shaped, broadened portion (65) tapers away from the connection element (43).

14. Apparatus in accordance with claim 12 or claim 12, characterised in that inner surface (121) of the wedge-shaped, broadened portion (65) facing the pulling member (33) is roughened or provided with a structure, in particular with a toothed structure (123).

15. Apparatus in accordance with one of the claims 12 to 14, characterised in that the blocking control element (81) arranged at the lead-through (61) acts on the pulling member (33) in such a way that with a movement of the pulling member (33) towards the connection element (43), the blocking control element (81) and the lead-through (61) are moved with the pulling member (33).

16. Apparatus in accordance with one of the claims 2 to 15, characterised in that the pulling member (33) is a component of a block and tackle, which is secured, on the one hand, to the connection element (43) and, on the other hand, to the chassis (27).

17. Apparatus in accordance with claim 16, characterised in that at least one deflection device for the pulling member (33) is arranged at the connection element (43), through which the end piece of the pulling member (33) adjacent the connection element (43) is deflected, preferably through about 180°, and in that the deflected end piece of the pulling member (33) stands in connection with the chassis (27).

18. Apparatus in accordance with claim 16 or claim 17, characterised in that a deflection roller (57) is rotatably journalled on the connection element (43) as a deflecting device, with the deflection roller being contacted by the pulling member (33) essentially over an angle of 180°.

19. Apparatus in accordance with one of the claims 16 to 18, characterised in that the pulling member (33) is guided precisely once around the deflection device, and its free end is secured to the chassis (27).

## Revendications

1. Procédé pour le prétensionnement de ceintures de sécurité (55), en particulier pour véhicules, comprenant au moins une partie de ceinture (51, 53) fixée à au moins deux et de préférence trois points au châssis (27) du véhicule, ladite partie de ceinture étant reliée à au moins un des points de fixation par l'intermédiaire d'un élément de liaison (43), de préférence une serrure de ceinture comprenant un mécanisme de prétensionnement fixé au châssis (27), ledit mécanisme de prétensionnement comprenant au moins un capteur d'accélération (11), une source d'énergie (15), une unité d'entraînement (19), et un organe de traction (33), dans lequel la source d'énergie (15) est susceptible d'être activée au moyen du capteur d'accélération (11), et en cas d'activation, l'élément de liaison (43) est déplacé brutalement en éloignement de sa position de départ, par l'intermédiaire de l'organe de traction (33) relié à l'unité d'entraînement (19), en particulier un câble ou un câble Bowden (35), de telle manière que la ceinture (55) est prétendue, et, après que le prétensionnement soit complet, on empêche un déplacement en retour sensible de l'élément de liaison (43) en direction de sa position de départ, au moyen d'un dispositif de blocage (68) qui s'engage automatiquement, du fait qu'au commencement du mouvement de retour de l'élément de liaison (43) au moins un élément de blocage principal (67, 75, 75', 75" ; 103, 105) est amené automatiquement hors d'une position de déblocage (67', 103') jusque dans une position blocage (67", 103"), dans laquelle l'organe de traction (33) de l'élément de blocage principal (67, 75, 75', 75" ; 103, 105) est coincé par l'élément de blocage principal (67, 75, 75', 75" ; 103, 105) si fermement que le mouvement de retour est terminé,
caractérisé en ce que
un élément de blocage de commande (80, 101), en liaison avec l'élément de blocage principal (67, 75, 75', 75" ; 103, 105), est déplacé automatiquement par l'organe de traction (33) au commencement du mouvement de retour de l'élément de liaison (43) de telle manière qu'il déplace l'élément de blocage principal (67, 75, 75', 75" ; 103, 105) de la position de déblocage (67', 103') jusque dans la position de blocage (67", 103").

2. Dispositif pour le prétensionnement de ceintures de sécurité (55), en particulier pour des véhicules comprenant au moins une partie de ceinture (51, 53) fixée en au moins deux et de préférence trois points au châssis (27) du véhicule, ladite partie de ceinture étant reliée à l'un au moins des points de fixation par l'intermédiaire d'un élément de liaison (43), de préférence une serrure de ceinture avec un mécanisme de prétensionnement fixé au châssis, ledit mécanisme de prétensionnement comprenant au moins un capteur d'accélération (11), une source d'énergie (15), une unité d'entraînement (19), et un organe de traction (33), dans lequel la source d'énergie (15) est susceptible d'être activée au moyen du capteur d'accélération (11), et lors de l'activation, l'élément de liaison (43) est brutalement déplacé hors de sa position de départ par l'intermédiaire de l'organe de traction (33) relié à l'unité d'entraînement (19), en particulier un câble ou un câble Bowden (35), de telle façon que la ceinture (55) est prétendue, en particulier pour mise en oeuvre du procédé selon l'une ou plusieurs des revendications précédentes, dans lequel il est prévu en situation fixe par rapport au châssis ou sur la partie de liaison (43) au moins une traversée (61) avec un perçage (63) pour l'organe de traction (33), et un dispositif de blocage (58) est agencé dans la traversée (61), ledit dispositif de blocage comprenant au moins un élément de blocage principal (67, 75, 75', 75" ; 103, 105) qui est amené au commencement du mouvement de retour de l'élément de liaison (43) automatiquement hors d'une position de déblocage (67', 107 103') jusque dans une position de blocage (67", 103") dans laquelle l'organe de traction (33) est coincé par l'élément de blocage principal (67, 75, 75', 75" ; 103, 105) si fermement que le mouvement de retour est terminé,
caractérisé en ce que
il est prévu un élément de blocage de commande (81 101) qui est en liaison avec l'élément de blocage principal (67, 75, 75', 75" ; 103, 105), et qui est déplacé au commencement du mouvement de retour de l'élément de liaison (43) automatiquement par l'organe de traction (33), de telle manière qu'il déplace l'élément de blocage principal (67, 75, 75', 75" ; 103, 105) de la position de déblocage (67', 103') jusque dans la position de blocage (67", 103").

3. Dispositif selon la revendication 2, caractérisé en ce que l'élément de blocage principal est réalisé sous forme d'un coin de blocage (75, 75', 75"), lequel est réalisé de telle manière et agencé de telle manière dans l'élargissement (65, 65') en forme de coin, qu'un côté du coin de blocage (75, 75', 75") s'étend sensiblement parallèlement à la surface de l'organe de traction (33) en tant que surface de coincement (77, 77'), et un autre côté s'étend sensiblement parallèlement à la surface intérieure (73), détournée de l'organe de traction, de l'élargissement (65, 65') en forme de coin, et en ce que l'élément de blocage de commande (81) qui enferme l'organe de traction (33) est réalisé sous forme d'un élément annulaire (81') agencé à la face inférieure du coin ou des coins de blocage (75, 75', 75"), dont la surface périphérique intérieure (83) est appliquée sous une légère pression contre l'organe de traction (33) de sorte que lors d'un déplacement de l'organe de traction (33) vers l'élément de liaison (43) l'élément annulaire (81') et le ou les coin(s) de blocage (75, 75', 75") est(sont) déplacé(s) conjointement avec l'organe de traction (33).

4. Dispositif selon la revendication 3, caractérisé en ce que le côté (77, 77') du coin de blocage (75, 75', 75") appliqué contre l'organe de traction (33) est rendu rugueux, ou pourvu d'une structure, en particulier une denture (79, 79').

5. Dispositif selon la revendication 2, caractérisé en ce que l'élément de blocage principal est réalisé sous forme d'un coin de blocage (75, 75', 75"), lequel est réalisé de telle manière et est agencé de telle manière dans l'élargissement (65, 65') en forme de coin, qu'un côté du coin de blocage (75, 75', 75") s'étend sensiblement parallèlement à la surface de l'organe de traction (33) en tant que surface de coincement (77, 77'), et un autre côté s'étend sensiblement parallèlement à la surface intérieure (73), détournée de l'organe de traction, de l'élargissement (65, 65') en forme de coin, et en ce que le coin de blocage (73") comporte a son extrémité inférieure un prolongement (85) qui dépasse au-delà de la surface de coincement (77) avec un perçage (87) pour l'organe de traction (33) et comporte un autre élargissement (89) en forme de coin, dans lequel est agencée une tige cylindrique (81") en tant qu'élément de blocage de commande (81), au moyen de laquelle le coin de blocage (75") et l'organe de traction (33) sont en liaison l'un avec l'autre en coopération de forces après le commencement du mouvement de retour de l'élément de liaison (43).

6. Dispositif selon la revendication 5, caractérisé en ce que la surface périphérique de la tige cylindrique (81") possède une surface rugueuse, ou une surface pourvue d'une structure, par exemple une denture (91).

7. Dispositif selon l'une ou l'autre des revendications 5 et 6, caractérisé en ce que la surface intérieure (95), détournée de l'organe de traction (33), de l'autre élargissement (89) en forme de coin est rugueuse, ou dotée d'une structure, par exemple une denture (93).

8. Dispositif selon l'une des revendications 5 à 7, caractérisé en ce que, sur le prolongement (85) du coin de blocage (75") repose un coin de blocage (75') sans prolongement, de sorte que les deux surfaces de coincement (77, 77') des coins de blocage (75', 75") sont radialement opposées par rapport à l'organe de traction (33).

9. Dispositif selon la revendication 2, caractérisé en ce qu'il est prévu au niveau du perçage (63) un élargissement (97) approximativement de forme circulaire, qui est pourvu sur une région partielle située vers l'élément de liaison (43) d'une denture d'enclenchement (99), en ce qu'il est prévu dans l'élargissement de forme circulaire (97) un arbre (101) avec deux roues dentées (103, 105) fixées solidairement en rotation du côté des extrémités, lesdites roues dentées s'engageant uniquement dans la position de blocage (103') dans la denture d'enclenchement (99), et en ce que l'arbre (101) est entouré plusieurs fois par l'organe de traction (33), de sorte que l'arbre (101) est entraîné par l'élément de liaison (43) qui se déplace en sens opposé à la direction de prétensionnement, jusqu'à engagement des roues dentées (103, 105) dans la denture d'enclenchement (99).

10. Dispositif selon la revendication 9, caractérisé en ce que la surface de l'arbre (120) est rugueuse, ou dotée d'une structure (107).

11. Dispositif selon l'une des revendications 2 à 10, caractérisé en ce que la traversée (61) est reliée par l'intermédiaire d'un axe (109) en basculement sur un élément de montage (111) fixé sur le châssis (27), en ce que l'organe de traction (33) est guidé de façon exempte de coincement jusque dans la position de déblocage, dans un guidage (104) formé par l'élément de montage (111) et par un talon (113) prévu au niveau de la traversée (61), et en ce que l'axe (109) est agencé de telle façon que dans la position de blocage un couple de rotation agit sur la traversée (61) de manière que le talon (113) est basculé en direction de l'élément de montage (111), et l'organe de traction (33) est fermement coincé dans le guidage (115).

12. Dispositif selon l'une des revendications 2 à 11, caractérisé en ce que les éléments qui coopèrent les uns avec les autres dans le dispositif de blocage (68) sont inversés sur le plan cinématique.

13. Dispositif selon la revendication 12, caractérisé en ce que l'élément de blocage principal (67) est agencé en position fixe sur le châssis ou sur la partie de liaison (43), et la traversée (61) est agencée de façon déplaçable sur l'organe de traction (33), et en ce que l'élargissement (65) en forme de coin va en se rétrécissant en s'éloignant de l'élément de liaison (43).

14. Dispositif selon l'une ou l'autre des revendications 12 et 13, caractérisé en ce que la surface intérieure (121), tournée vers l'organe de traction (33), de l'élargissement en forme de coin (65) est rendue rugueuse, ou pourvue d'une structure, par exemple une denture (123).

15. Dispositif selon l'une des revendications 12 à 14, caractérisé en ce que l'élément de blocage de commande (81) agencé au niveau de la traversée (61) attaque l'organe de traction (33), de manière que lors d'un déplacement de l'organe de traction (33) en direction de l'élément de liaison (43) l'élément de blocage de commande (81) et la traversée (61) sont déplacés conjointement avec l'organe de traction (33).

16. Dispositif selon l'une des revendications 2 à 15, caractérisé en ce que l'organe de traction (33) fait partie d'un dispositif à palan, lequel est fixé d'une part à l'élément de liaison (43) et d'autre part au châssis (27).

17. Dispositif selon la revendication 16, caractérisé en ce que sur l'élément de liaison est agencé au moins un dispositif de renvoi pour l'organe de traction (33), au moyen duquel la partie terminale de l'organe de traction (33), tournée vers l'élément de liaison (43), est renvoyée de préférence sur environ 180°, et en ce que la partie terminale renvoyée de l'organe de traction (33) est reliée au châssis (27).

18. Dispositif selon l'une ou l'autre des revendications 16 et 17, caractérisé en ce que, sur l'élément de liaison (43) est monté en rotation un galet de renvoi (57) en tant que dispositif de renvoi, sur lequel l'organe de traction (33) s'appuie sensiblement sur un angle de 180°.

19. Dispositif selon l'une des revendications 16 à 18, caractérisé en ce que l'organe de traction (33) est passé exactement une fois autour du dispositif de renvoi, et en ce qu'il est fixé par son extrémité libre sur le châssis (27).
